# EUROPÄISCHE PATENTSCHRIFT

(11) **EP 2 457 002 B1**
(45) Veröffentlichungstag und Bekanntmachung des Hinweises auf die Patenterteilung: **20.08.2014**
(21) Anmeldenummer: 10779805.0
(22) Anmeldetag: 17.11.2010
(51) Int. Cl.: F16H 61/24, F16H 59/10

(54) **VORRICHTUNG ZUM ERFASSEN DER POSITION EINES SCHALT- UND/ODER WÄHLHEBELS FÜR EIN GETRIEBE UND SCHALTVORRICHTUNG FÜR DAS GETRIEBE EINES KRAFTFAHRZEUGES**
DEVICE FOR DETECTING THE POSITION OF A SHIFT AND/OR SELECTOR LEVER FOR A TRANSMISSION AND SHIFTING DEVICE FOR THE TRANSMISSION OF A MOTOR VEHICLE
DISPOSITIF DE DETECTION DE LA POSITION D'UN LEVIER DE CHANGEMENT ET/OU DE SELECTION DE VITESSES POUR UNE BOITE DE VITESSES ET DISPOSITIF DE COMMANDE POUR LA BOITE DE VITESSES D'UN VEHICULE AUTOMOBILE

(30) Priorität: 20.11.2009 DE 102009053873
(43) Veröffentlichungstag der Anmeldung: 30.05.2012
(73) Patentinhaber: ECS Engineered Control Systems AG, 9015 St. Gallen (CH)
(72) Erfinder: UHLENBRUCK, Falk, 35644 Hohenahr (DE)
(74) Vertreter: Müller, Eckhard
(86) Internationale Anmeldenummer: PCT/EP2010/067679
(87) Internationale Veröffentlichungsnummer: WO 2011/061223

(56) Entgegenhaltungen:
- EP-A1- 1 752 688
- EP-A2- 0 825 364
- DE-B3-102008 028 618
- JP-A- 2007 045 390
- US-A1- 2003 034 774
- US-A1- 2005 258 822
- US-B1- 6 382 045

## Beschreibung

Die Erfindung betrifft eine Vorrichtung zum Erfassen der Position eines Schalt- und/oder Wählhebels für ein Getriebe mit einem Signalerzeugungselement, welches zusammen mit dem Schalt-/Wählhebel bewegbar ist, und mit wenigstens einem das Signal des Signalerzeugungselements erfassenden Sensorelement als Messwertgeber. Die Erfindung betrifft ferner eine Schaltvorrichtung für ein Getriebe, insbesondere für den Einsatz in einem Kraftfahrzeug, mit einer derartigen Vorrichtung zum Erfassen der Position eines Schalt- und/oder Wählhebels.

Kraftfahrzeuge weisen zum Schalten Ihres Getriebes üblicherweise eine Schaltvorrichtung mit einem Schalt- und/oder Wählhebel auf. Je nach Ausführung des Getriebes kann der Wähl-/Schalthebel innerhalb einer oder mehrerer Schaltgassen bewegt werden. Beispielsweise kann der Schalt-/Wählhebel innerhalb einer ersten Schaltgasse verschiedene automatisch schaltbare Fahrstufen, wie beispielsweise "P", "R", "M", "D", wählen und ist von dieser ersten Schaltgasse in eine zweite Schaltgasse umschaltbar, in welcher einzelne manuell schaltbare Gänge anwählbar sind. Dazu ist der Schalt-/Wählhebel an einer Kulisse schwenkbar gelagert, wobei der Schalt-/Wählhebel zum Schalten innerhalb einer Schaltgasse um eine erste Drehachse und zum Umschalten von der einen Schaltgasse in eine andere Schaltgasse um eine zweite Drehachse verschwenkbar ist.

Die bekannten Schaltvorrichtungen weisen üblicherweise eine Arretiereinrichtung, beispielsweise in Art von Rast- und Gegenrastmitteln auf, welche vorbestimmte Schaltpositionen für den Schalt-/Wählhebel markieren und den Schalt-/Wählhebel vorzugsweise formschlüssig halten, wenn er in die entsprechende Position überführt worden ist. Derartige Arretiermittel sind üblicherweise an dem unteren freien Ende des Schalt-/Wählhebels angeordnet.

Zur Ansteuerung des Getriebes in Abhängigkeit der Stellung des Schalt-/Wählhebels ist es aus der DE 10 2008 028 618 B3 bekannt, eine magnetische Drehwinkel-Sensoranordnung zur unmittelbaren Erfassung der Winkelstellung oder der Drehbewegung des Schalt-/Wählhebels vorzusehen. Die Sensorelemente der bekannten Sensoranordnung liefern dabei Signale an eine elektrische Steuereinheit, welche über wenigstens ein Stellglied das Getriebe des Kraftfahrzeuges ansteuert. Die bekannte Drehwinkel-Sensoranordnung ist zur Erfassung des Verdrehwinkels des Schalt-/Wählhebels im Bereich einer der Schwenkachsen des Schalt-/Wählhebels angeordnet. Um dort eine optimale Erfassung der Position des Schalt-/Wählhebels zu erzielen, sind Hilfsbauteile für die Sensoranordnung erforderlich. Diese zusätzlichen Bauteile erhöhen die Komplexität der gesamten Einheit und machen deren Herstellung und Montage relativ aufwendig. Da zudem jedes Bauteil eine gewisse Fertigungstoleranz aufweist, beeinflussen zusätzliche Hilfsbauteile die erreichbare Genauigkeit bei der Erfassung der Position des Schalt-/Wählhebels.

Die gattungsgemäße EP 1 752 688 A1 offenbart eine Shift-by-wire-Schaltvorrichtung mit einem Wählhebel, der von einem Benutzer betätigt werden kann, um fernbedient ein Kraftfahrzeuggetriebe zu steuern. Die Shift-by-wire-Schaltvorrichtung weist Vorspanneinrichtungen auf, die ein Ende des Wählhebels mit einer profilierten Oberfläche in Kontakt halten, um dem Benutzer ein Schaltgefühl zu geben. Darüber hinaus sind Erfassungseinrichtungen, die Sendeeinrichtungen und Empfangseinrichtungen enthalten, vorgesehen, wobei die Sendeeinrichtungen oder die Empfangseinrichtungen am Ende des Wählhebels derart angebracht sind, dass die Position des Endes des Wählhebels auf der profilierten Oberfläche erfasst werden kann. Jeder möglichen Einstellposition des Wählhebels ist ein eigener Sensor zugeordnet.

Der Erfindung liegt daher die Aufgabe zugrunde, eine Vorrichtung zum Erfassen der Position eines Schalt- und/oder Wählhebels mit den eingangs genannten Merkmalen dahingehend weiterzuentwickeln, dass sie einfach realisierbar und leicht montierbar ist. Gleichfalls soll die Position des Schalt- bzw. Wählhebels mit hoher Genauigkeit erfasst werden können. Ferner soll eine entsprechende Schaltvorrichtung für das Getriebe eines Kraftfahrzeuges vorgeschlagen werden.

Zur Lösung der Aufgabe wird eine Vorrichtung zum Erfassen der Position eines Schalt- und/oder Wählhebels vorgeschlagen, welche die in Anspruch 1 genannten Merkmale aufweist. Ferner wird eine Schaltvorrichtung für ein Getriebe, insbesondere für den Einsatz in einem Kraftfahrzeug, mit den Merkmalen des Anspruches 15 vorgeschlagen. Vorteilhafte Ausgestaltungen ergeben sich aus den Unteransprüchen sowie der nachfolgenden Beschreibung.

Die erfindungsgemäße Vorrichtung zum Erfassen der Position eines Schalt- und/oder Wählhebels ist zur Steuerung von Funktionen eines Getriebes oder eines Antriebes, insbesondere eines Kraftfahrzeuges, geeignet. Die erfindungsgemäße Vorrichtung kann dabei mit einem Schalthebel eines manuellen Getriebes oder einem Wählhebel eines Automatikgetriebes zusammenwirken. Auch ist es möglich, dass die erfindungsgemäße Vorrichtung mit einem Schalt- und Wählhebel eines kombinierten Getriebes zusammenwirkt, welches sowohl einen Automatikmodus aufweist als auch eine zusätzliche manuelle Schaltfunktion zum manuellen Schalten der Gänge hat.

Die erfindungsgemäße Vorrichtung zum Erfassen der Position eines Schalt-/Wählhebels weist wenigstens ein Signalerzeugungselement auf, welches zusammen mit dem Schalt-/Wählhebel bewegbar ist. Die Vorrichtung weist ferner wenigstens ein das Signal des Signalerzeugungselementes erfassendes Sensorelement auf, welches als Messwertgeber dient.

Erfindungsgemäß ist vorgesehen, dass das Signalerzeugungselement einem Arretiermittel für den Schalt-/Wählhebel zugeordnet ist.

Durch diese Maßnahme wird die Position des Schalt-/Wählhebels unmittelbar im Bereich derjenigen Mittel vorgenommen, welche zum Festlegen des Schalt-/Wählhebels in vorgegebenen Positionen, beispielsweise innerhalb einer Schaltgasse, oder Positionen zum Wechseln von einer Schaltgasse in eine andere Schaltgasse dienen. Es ist dadurch die Position des Schalt-/Wählhebels in den wählbaren Schaltpositionen bzw. Schaltstellungen, welche beispielsweise von der Kulisse einer Schaltvorrichtung vorgegeben werden, mit hoher Genauigkeit erfassbar. Es kann dadurch die Position des Schalt-/Wählhebels zuverlässig erfasst werden, da Fehlerquellen für etwaige Messwertverfälschungen aufgrund notwendiger Hilfsbauteile vermieden sind. Die erfindungsgemäße Vorrichtung trägt somit wesentlich zu einer hohen Funktionssicherheit beim Ansteuern des Getriebes oder Antriebes eines Kraftfahrzeuges mittels dem Schalt-/Wählhebel bei. Da Hilfsbauteile zum Erfassen der Position des Schalt-/Wählhebels vermieden werden können, ist die erfindungsgemäße Vorrichtung ferner in einfacher Weise realisierbar.

Unter Arretiermitteln sind im Zuge der Erfindung solche Mittel zu verstehen, welche zum Festlegen des Schalt-/Wählhebels in anwählbaren Schaltpositionen, beispielsweise innerhalb einer Schaltgasse, dienen. Der Schalt-/Wählhebel ist in den arretierten Positionen in seiner Lage gesichert und vorzugsweise erst durch Aufbringen einer entsprechenden Schaltkraft durch den Bediener des Schalt-/Wählhebels wieder zu befreien. Das Arretiermittel kann Teil des Schalt-/Wählhebels sein. Im montierten Zustand ist das Arretiermittel bevorzugt an dem Schalt-/Wählhebel befestigt, insbesondere verschiebbar geführt. Als Arretiermittel sind Rastmittel, Klemm- oder Spannmittel denkbar.

Nach einer ersten Ausgestaltung der Erfindung ist es vorgesehen, dass das Signalerzeugungselement mit dem Arretiermittel fest verbunden ist. Dadurch ist die Erfassung der Stellung des Schalt-/Wählhebels in besonders sichere Art und Weise gewährleistet, da etwaige zeitliche Verzögerungen zwischen dem Ansprechen der Erfassungsvorrichtung und dem Bewegen des Schalt-/Wählhebels in eine andere Position durch die feste Verbindung von Signalerzeugungselement und Arretiermittel vermieden sind.

Nach einer weiteren Ausgestaltung der Erfindung ist es vorgesehen, dass das Signalerzeugungselement innerhalb des Arretiermittels angeordnet ist. Dadurch ist sichergestellt, dass das Signalerzeugungselement die Sicherungsfunktion des Arretiermittels bezüglich des Schalt-/Wählhebels störungsfrei ausüben kann. Ferner ist dadurch eine Anordnung des Signalerzeugungselementes in der Weise möglich, dass es vor mechanischen äußeren Eingriffen geschützt ist.

In diese Richtung zielt auch die Maßnahme einer weiteren Ausgestaltung der Erfindung, bei der das Arretiermittel ein Kunststoffteil ist und das Signalerzeugungselement zumindest teilweise von dem Material des Arretiermittels umgeben ist. Durch die Ausbildung des Arretiermittels als Kunststoffteil ist das Signalerzeugungselement zudem in besonders einfacher und kostengünstiger Weise in das Arretiermittel integrierbar.

Bevorzugt ist das Signalerzeugungselement ein Magnet. Es ist dadurch die Position des Schalt-/Wählhebels auf besonders einfache und kostengünstige Weise berührungslos erfassbar, beispielsweise indem die magnetische Feldstärke als Messgröße durch das wenigstens eine Sensorelement erfasst wird.

Besonders kostengünstig ist das Signalerzeugungselement realisierbar, wenn es ein Dauermagnet ist.

Nach einer Ausgestaltung der Erfindung kann es vorgesehen sein, dass das Signalerzeugungselement ein Magnet ist, dessen Pole in Richtung zu dem Sensorelement gesehen, hintereinanderliegend angeordnet sind. Das Signalerzeugungselement ist bei dieser Ausgestaltung als sogenannter Diametralmagnet ausgebildet. Dadurch kann es beim Schalten des Schalt-/Wählhebels von einer Schaltposition in eine andere Schaltposition je nach Lage des Sensorelementes gegenüber dem Signalerzeugungselement zu einer Umkehr des Magnetfeldes kommen. Die Umkehr des Magnetfeldes kann mittels des Sensorelementes durch eine Änderung des Vorzeichens der erfassten magnetischen Feldstärke erfasst werden. Das von dem Signalerzeugungselement erzeugte und von dem Sensorelement erfassbare Signal enthält somit durch die Vorzeichenänderung eine weitere auswertbare Information. Es ist dadurch die Erfassung der Position des Schalt-/Wählhebels besonders sicher und genau durchführbar.

Alternativ kann es natürlich auch vorgesehen sein, dass das Signalerzeugungselement ein Magnet ist, dessen Pole, ausgehend von dem Signalerzeugungselement in Richtung zu dem Sensorelement gesehen, nebeneinanderliegend angeordnet sind.

Nach einer weiteren Ausgestaltung der Erfindung ist vorgesehen, dass zwischen Signalerzeugungselement und Sensorelement Gegenarretiermittel angeordnet sind, welche mit dem Arretiermittel zusammenwirken. Dadurch ist das Sensorelement vor äußeren mechanischen Einwirkungen geschützt untergebracht. Darüber hinaus ist dadurch eine ordnungsgemäße Festlegung bzw. Arretierung des Schalt-/Wählhebels in der jeweiligen Schaltstellung gewährleistet, ohne dass die Positionserfassung durch das Zusammenwirken von Signalerzeugungselement und Sensorelement beeinträchtigt wird.

Die Gegenarretiermittel sind bevorzugt gehäusefest angeordnet.

Das Sensorelement kann an einer Platine oder Folie angeordnet sein. Dadurch ist eine bereits vormontierbare Einheit realisierbar, welche vormontiert mit wenig Aufwand in die erfindungsgemäße Vorrichtung eingebaut werden kann. Auch ein Austausch der Einheit ist dadurch einfach durchführbar.

Sofern das Sensorelement an einer Folie angeordnet ist, ist zudem eine besonders kompakte Gestaltung aufgrund der wenig aufbauenden Folie realisierbar. Durch die Anordnung des Sensorelementes an einer Platine ist eine genaue Positionierung des Sensorelementes durch eine Ausrichtung der Platine möglich, so dass mit dem Einbau der Platine zugleich das Sensorelement exakt in eine vorgegebene Lage gebracht ist.

Es kann auch vorgesehen sein, dass das Sensorelement fest mit den Gegenarretiermitteln verbunden ist. Dadurch kann auf ein zusätzliches Bauteil, wie beispielsweise eine Platine, verzichtet werden. Auch ist dadurch eine einfache Montage des Sensorelementes möglich, indem Sensorelement und Gegenarretiermittel bereits in einem Vormontageschritt fest miteinander verbunden werden und insofern eine vormontierte Einheit bilden.

Eine besonders feste und stabile Verbindung von Sensorelement und Gegenarretiermitteln ist dann realisiert, wenn das Sensorelement in die Gegenarretiermittel eingeformt ist. Das Sensorelement kann beispielsweise von dem Werkstoff der Gegenarretiermittel, beispielweise Kunststoff, ummantelt sein, so dass das Sensorelement von außen gegen mechanische Beanspruchung geschützt vorliegt. Insofern zielt diese Maßnahme auch darauf ab, ein hohes Maß an Ausfallsicherheit der erfindungsgemäßen Vorrichtung zu gewährleisten.

Nach einer bevorzugten Ausgestaltung der Erfindung ist vorgesehen, dass das Sensorelement als Messwert ein analoges Signal liefert. Dadurch können auch Positionen des Schalt-/Wählhebels erfasst werden, welche außerhalb des zu zensierenden Bereiches liegen, welcher für die Schaltung des Getriebes relevant ist. Die auf diese Weise erfassbaren Informationen ermöglichen eine softwaremäßig Überprüfung, ob der Schalt-/Wählhebel tatsächlich sich in einer vorgewählten Schaltposition befindet. Indem ein Sensorelement mit einem analogen Signal als Messwert herangezogen wird, lassen sich besonders einfach Schaltinformationen über die tatsächliche Position des Schalt-/Wählhebels ermitteln, so dass ein besonders hohes Maß an Sicherheit an Ausfall und Störung realisiert werden kann.

In diese Richtung zielt auch die Maßnahme ab, dass das Sensorelement als Messwert ein vorzeichenabhängiges, analoges Signal liefert. Dadurch werden von dem Sensorelement zwei voneinander separate Informationen zur Position bzw. Bewegung des Schalt-/Wählhebels gegeben, durch welche die Gefahr einer fehlerhaften Ermittlung der angewählten Position des Schalt-/Wählhebels weiter verringert ist.

Bei einer vorteilhaften Ausführung der erfindungsgemäßen Vorrichtung ist vorgesehen, dass das Sensorelement als Messwert ein Signal liefert, dessen Vorzeichen bei einem Wechsel von einer anwählbaren Position des Schalt-/Wählhebels in eine andere anwählbare Position des Schalt-/Wählhebels wechselt. Eine solche Ausführung kann beispielweise dadurch realisiert sein, dass-beispielsweise benachbarte - Sensorteilelemente gegensinnig orientiert und/oder gegensinnig angeschlossen sind. Insbesondere kann es sich bei den benachbarten Sensorteilelementen beispielsweise um in Reihe geschaltete und gegensinnig gepolte Spulen handeln.

Selbstverständlich kann es nach einer anderen Ausgestaltung der Erfindung auch vorgesehen sein, dass das Sensorelement als Messwert ein digitales Signal liefert. Das digitale Signal kann dabei vorzeichenabhängig vorliegen.

Es bietet sich an, dass das wenigstens eine Sensorelement ein Hall-Sensor ist. Dadurch ist das Sensorelement kostengünstig realisierbar.

Ferner bietet es sich an, dass das Sensorelement zum Erfassen der Positionen des Schalt-/Wählhebels innerhalb einer Schaltgasse ausgebildet ist. Das Sensorelement kann zum Erfassen der Positionen des Schalt-/Wählhebels innerhalb einer Schaltgasse mit manuell anwählbaren Gängen ausgebildet sein.

Alternativ oder ergänzend kann es natürlich auch vorgesehen sein, dass das Sensorelement zum Erfassen der Positionen des Schalt-/ Wählhebels innerhalb einer Schaltgasse mit automatisch schaltbaren Fahrstufen ausgebildet ist.

Nach einem eigenständigen Gedanken der Erfindung, der auch losgelöst davon, ob das Sensorelement als Messwert ein Vorzeichen abhängiges, analoges Signal liefert oder davon, ob das Sensorelement als Messwert ein, insbesondere analoges, Signal liefert, dessen Vorzeichen bei einem Wechsel von einer anwählbaren Position des Schalt-/Wählhebels in eine andere anwählbare Position des Schalt-/Wählhebels wechselt, kann das Sensorelement vorteilhaft wenigstens teilweise zwischen zwei anwählbaren Positionen des Schalt-/Wählhebels angeordnet sein. Dadurch ist sichergestellt, dass das Sensorelement sowohl beim Verschwenken des Schalt-/Wählhebels in die eine anwählbaren Schaltposition als auch in die andere anwählbare Schaltposition ein ausreichend starkes und auswertbares Signal liefert, ohne dass dazu zwei Sensorelemente eingesetzt werden müssen. Insofern ergibt sich daraus auch eine Vereinfachung insbesondere der erfindungsgemäßen Vorrichtung, da für zwei anwählbare Schaltpositionen lediglich ein Sensorelement benötigt wird. Auch ergibt sich daraus eine Kostenersparnis.

Nach einer Ausgestaltung der Erfindung sind wenigstens zwei Sensorelemente vorgesehen, welche zum Erfassen der Positionen des Schalt-/Wählhebels innerhalb einer Schaltgasse oder von einer Position innerhalb einer Schaltgasse in eine Position innerhalb einer anderen Schaltgasse ausgebildet ist. Dadurch ist einem möglichen Ausfall einer der beiden Sensorelemente Rechnung getragen, so dass dann die erfindungsgemäße Vorrichtung noch immer ein Erfassen der Position des Schalt-/Wählhebels gewährleistet.

Nach einem weiteren eigenständigen Gedanken der Erfindung, der auch losgelöst davon, ob das Sensorelement als Messwert ein Vorzeichen abhängiges, analoges Signal liefert oder davon, ob das Sensorelement als Messwert ein, insbesondere analoges, Signal liefert, dessen Vorzeichen bei einem Wechsel von einer anwählbaren Position des Schalt-/Wählhebels in eine andere anwählbare Position des Schalt-/Wählhebels wechselt, können wenigstens zwei Sensorelemente vorgesehen, von denen wenigstens ein Sensorelement zumindest teilweise zwischen benachbarten anwählbaren Positionen des Schalt-/Wählhebels liegen. Dadurch ist nicht nur ein hohes Maß an Ausfallsicherheit erreicht, sondern die erfindungsgemäße Vorrichtung ist einfach und kostengünstig zum Erfassen mehrerer Positionen des Schalt-/Wählhebels realisiert. Denn beispielsweise sind zur Erfassung von drei Schaltpositionen des Schalt-/Wähthebels lediglich zwei Sensorelemente erforderlich.

Bevorzugt sollten die Sensorelemente im Wesentlichen entlang einer Schaltgasse verteilt liegen. Dadurch sind die Sensorelemente dem Signalerzeugungselement unmittelbar räumlich zugeordnet, wenn das Arretiermittel mit dem zugeordneten Signalerzeugungselement in die entsprechend anwählbare Position des Schalt-/Wählhebels gebracht ist. Dadurch liefert das Sensorelement ein relativ starkes und damit gut auswertbares Signal.

Nach einem weiteren Erfindungsgedanken ist es vorgesehen, dass die erfindungsgemäße Vorrichtung zum Erfassen der Position eines Schalt-/Wählhebels Teil einer Schaltvorrichtung für ein Getriebe ist, welches insbesondere für den Einsatz in einem Kraftfahrzeug geeignet ist.

### Ausführungsbeispiele

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnung. Dabei bilden alle beschriebenen und/oder bildlich dargestellten Merkmale für sich oder in beliebiger sinnvoller Kombination den Gegenstand der vorliegenden Erfindung.

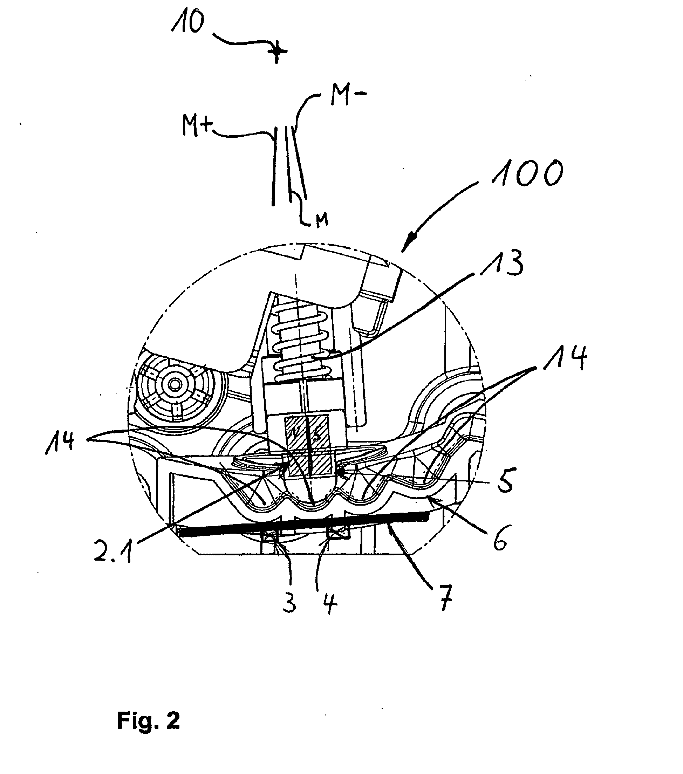

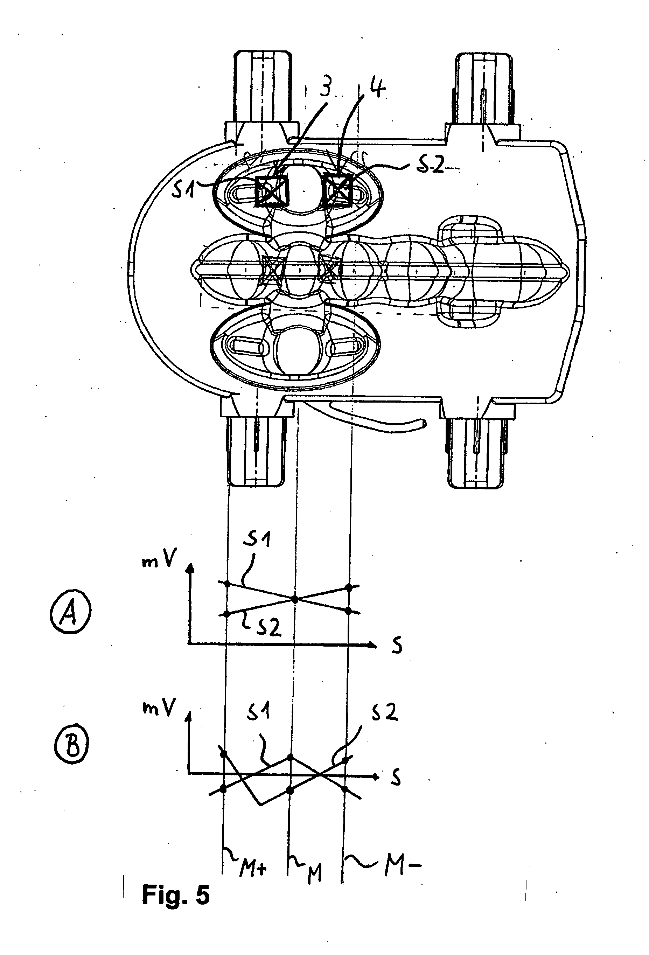

Bei den Figuren 2 und 5 A handelt es sich um Beispiele, die in den Ansprüchen nicht erfasst sind, die aber das Verständnis der Erfindung erleichtern.

Es zeigen:
- Fig. 1: eine Schaltvorrichtung für ein Getriebe mit einem Schalt-/Wählhebel und einer möglichen Ausführungsform der Vorrichtung zum Erfassen der Position des Schalt-/Wählhebels in Schnittdarstellung,
- Fig. 2: einen Ausschnitt der Schaltvorrichtung gemäß Figur 1, welcher die Vorrichtung zum Erfassen der Position eines Schalt-/Wählhebels zeigt,
- Fig. 3: einen Ausschnitt aus der Schaltvorrichtung gemäß Figur 1, welcher die erfindungsgemäße Vorrichtung zum Erfassen der Position eines Schalt-/Wählhebels nach einer anderen Ausführungsform zeigt,
- Fig. 4: eine Draufsicht auf die Schaltvorrichtung gemäß Figur 1 und
- Fig. 5: die Draufsicht gemäß Figur 4 mit Darstellungen des Signalverlaufes der Sensorelemente der Vorrichtung zum Erfassen der Position des Schalt-/Wählhebels, dargestellt für die Ausführungsformen gemäß der Figuren 2 und 3.

Dabei handelt es sich bei dem Ausführungsbeispiel nach Figur 2 und 5A nicht um einem Teil der Erfindung, sondern um einen Stand der Technik, der das Verständnis der Erfindung erleichtert.

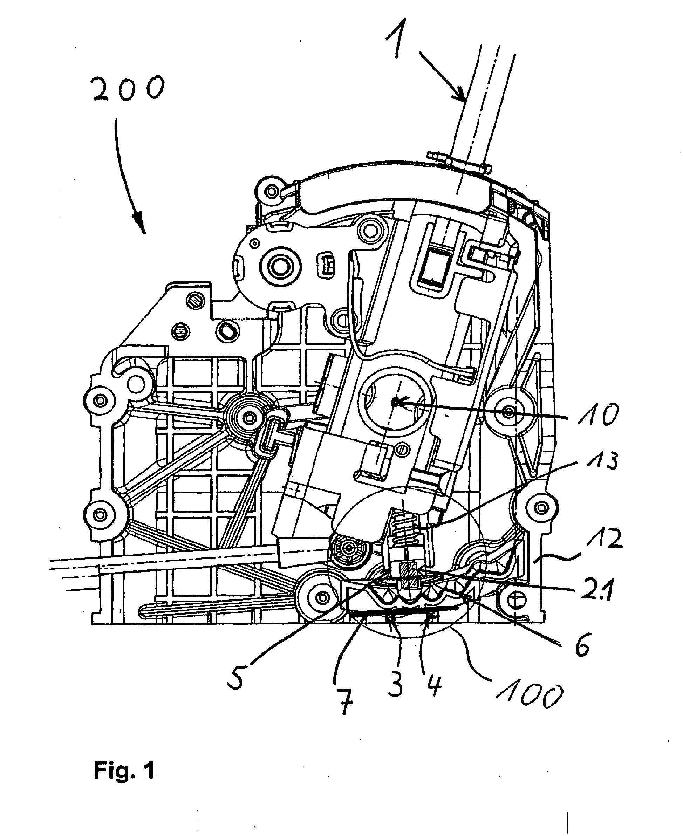

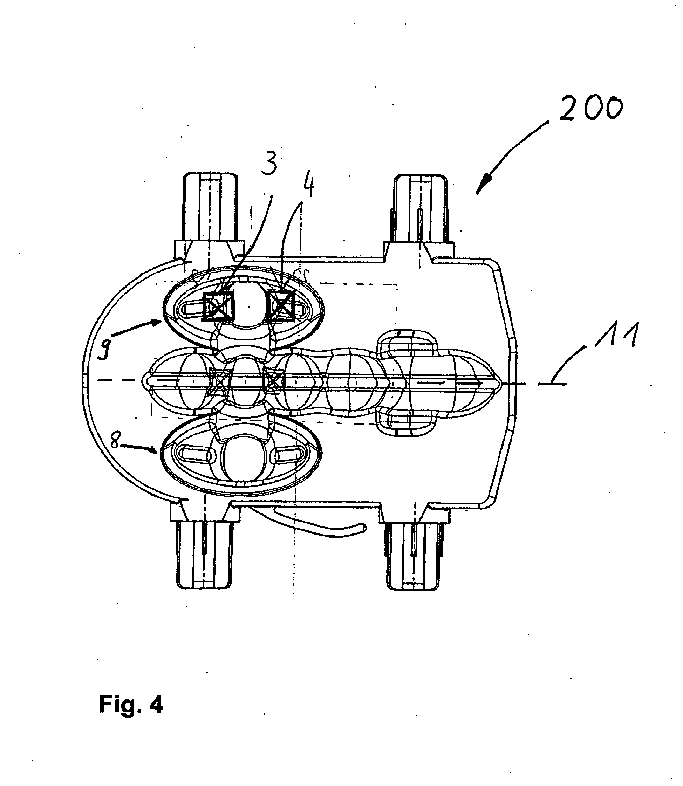

Figuren 1, 2 und 4 zeigen - in schematischer Darstellung - eine mögliche Ausführungsform einer Schaltvorrichtung 200 für ein automatisches Getriebe mit einer zusätzlichen manuellen Schaltfunktion. Mittels der Schaltvorrichtung 200 werden das Getriebe eines Kraftfahrzeuges und/oder direkt dessen Antrieb gesteuert. Die Schaltvorrichtung 200 weist einen Schalt- und/oder Wählhebel 1 auf, welcher von einem Bediener in verschiedene Positionen gebracht werden kann. Der Schalt- bzw. Wählhebel 1 ist dazu derart bewegbar, dass in einer ersten Schaltgasse verschiedene automatisch schaltbare Fahrstufen, wie beispielsweise "P", "R", "N", "D", "S", und in einer zweiten Schaltgasse 9 einzelne manuell schaltbare Gänge anwählbar sind und ein Umschalten zwischen einer vorbestimmten Fahrstufe der ersten Schaltgasse 8 und einer neutralen Position "M" der zweiten Schaltgasse 9 über eine Querschaltgasse ermöglicht ist. In der zweiten Schaltgasse 9 wird ausgehend von der neutralen Position "M" durch Verschwenken des Wählhebels 1 in eine "M+"-Position und eine "M-"-Position ein Hinauf- bzw. Herunterschalten der manuellen Gänge bewirkt. Zum Anwählen der Fahrstufen innerhalb einer Schaltgasse 8 bzw. 9 ist der Schalt-/Wählhebel 1 um eine erste Drehachse 10 drehbar gelagert. Zum Umschalten des Schalt-/Wählhebels 1 von der ersten Schaltgasse 8 in die zweite Schaltgasse 9 und umgekehrt zusätzlich um eine zweite Drehachse 11 drehbar gelagert, wie insbesondere aus Figur 4 ersichtlich ist. Die erste Drehachse 10 und die zweite Drehachse 11 sind dabei vorzugsweise in einem Winkel von im Wesentlichen 90° zueinander versetzt angeordnet.

Wie insbesondere aus Figur 1 ersichtlich ist, weist die Schaltvorrichtung 200 ein Arretiermittel 5 auf, welches dem Schalt-/Wählhebel 1 zugeordnet ist und mit Gegenarretiermitteln 6 zusammenwirkt. Die Gegenarretiermittel 6 sind gehäusefest angeordnet, vorzugsweise lösbar mit dem Gehäuse 12 der Schaltvorrichtung 200 oder einem mit dem Gehäuse 12 verbundenen Zwischenteil lösbar verbunden. Das Arretiermittel 5 und die damit zusammenwirkenden Gegenarretiermittel 6 dienen dazu, den Schalt-/Wählhebel 1 in anwählbaren Schaltpositionen wenigstens soweit zu arretieren, dass der Bediener des Schalt-/Wählhebels 1 einen Widerstand spürt, wenn er den Schalt-/Wählhebel 1 in die entsprechende Schaltposition überführt hat.

Bevorzugt ist das Arretiermittel 5 als Rastelement ausgebildet, welches bevorzugt gegen den Druck eines Federelements 13 verschiebbar an dem Schalt-/Wählhebel 1 angeordnet, insbesondere geführt ist. Das Arretiermittel 5 ist ferner bevorzugt an dem freien Ende des Schalt-/Wählhebels 1 angeordnet, welches sich innerhalb des Gehäuses 12 der Schaltvorrichtung 200 befindet und vorzugsweise in Bezug zu der ersten Drehachse 10 gegenüberliegend zu der (nicht dargestellten) Handhabe des Schalt-/Wählhebels 1 zum Ergreifen durch den Bediener liegt. Das Arretiermittel 5 bzw. Rastelement ist an seinem den Gegenarretiermitteln 6 zugewandten Ende vorzugsweise rund, insbesondere kugelförmig ausgebildet.

Die bevorzugt als Gegenrastmittel ausgebildeten Gegenarretiermittel 6 weisen wenigstens eine Aufnahme 14 auf, in welcher das Rastelement 5 in Eingriff bringbar ist. Wenn das Rastelement 5 in die Aufnahme 14 der Gegenrastmittel 6 gebracht ist, ist der Schalt-/Wählhebel 1 in der Schaltposition gehalten. Diese Schaltposition wird durch Drücken des Schalt-/Wählhebels 1 wieder verlassen, wodurch das Rastelement 5 gegen den Druck des Federelements 13 aus seiner Rastposition herausgebracht wird.

Die Gegenarretiermittel 6 bzw. Gegenrastmittel sind bevorzugt flächig insbesondere durch eine gemeinsame Fläche bzw. die Vorspannung gebildet und weisen mehrere Aufnahmen 14 für das Arretiermittel 5 bzw. Rastelement auf. Dadurch kann das Rastelement 5 in mehreren Schaltpositionen des Schalt-/Wählhebels 1 gegen die Gegenrastmittel 6 verrasten. Auch ist ein Verrasten des Rastelementes 5 gegen die Gegenrastmittel 6 sowohl in der einen Schaltgasse 8 als auch in der anderen Schaltgasse 9 möglich. Ebenfalls ist ein Erreichen verrasteter Schaltpositionen des Schalt-/Wählhebels 1 von der einen Schaltgasse 8 in die andere Schaltgasse 9 realisierbar.

Wie insbesondere Figur 1 zeigt, ist der Schaltvorrichtung 200 eine Vorrichtung zum Erfassen der Position des Schalt-/Wählhebels 1 zugeordnet. Mittels der Vorrichtung 100 wird die Bewegung des Schalt-/Wählhebels 1, insbesondere die Position des Schalt-/Wählhebels 1, sensorisch erfasst und nach Auswertung in einer (nicht dargestellten) Auswerteeinrichtung mittels eines (nicht dargestellten) Stellgliedes das Getriebe bzw. der Antrieb des Fahrzeuges gesteuert. Die Vorrichtung 100 weist dazu ein Signalerzeugungselement 2.1 auf und wenigstens ein vorzugsweise zwei Sensorelemente 3, 4, welche das Signal des Signalerzeugungselementes 2.1 erfassen. Bevorzugt ist das Signalerzeugungselement als magnetfelderzeugendes Element 2.1 ausgebildet, beispielsweise in Art eines Dauermagneten. Vorzugsweise ist das das Magnetfeld des Signalerzeugungselementes 2.1 erfassende Sensorelement 3 bzw. 4 als Hall-Sensor ausgebildet.

Das Signalerzeugungselement 2.1 ist bevorzugt dem Arretiermittel bzw. Rastelement 5 zugeordnet, insbesondere im Bereich des in Eingriffposition mit den Gegenrastmitteln 6 bringbaren Endes des Rastelementes 5 angeordnet. Dabei ist bevorzugt das Signalerzeugungselement 2.1 von dem vorzugsweise aus Kunststoff bestehenden Rastelement 5 umgeben, insbesondere ummantelt.

Die Sensorelemente 3, 4 sind bevorzugt an einer Platine 7 fest angeordnet, wobei die Platine 7 unterhalb der Gegenrastmittel 6 angeordnet ist, so dass zwischen der Platine 7 und dem Rastelement 5 die Gegenrastmittel 6 liegen. Die Platine 7 ist mitsamt den Sensorelementen 3, 4 vorzugsweise lösbar an den Gegenrastmitteln 6 und/oder dem Gehäuse 12 der Schaltvorrichtung 200 montiert.

Die Sensorelemente 3, 4 sind bevorzugt in Abstand zueinander an der Platine 7 angeordnet. Vorzugsweise liegen die Sensorelemente 3, 4 im Wesentlichen in Richtung der Schaltgasse 9, deren Schaltpositionen erfasst werden soll.

Wie insbesondere aus Figur 2 ersichtlich ist, betrifft die dort dargestellte Ausführungsform einer Vorrichtung 200 des Standes der Technik die Anordnung der Sensorelemente 3, 4 in der Weise, dass die Schaltpositionen "M+" und "M-" und gegebenenfalls die Neutralposition "M" einer sogenannten Tiptronic erfasst werden. Dazu befindet sich der Schalt-/Wählhebel 1 in der Schaltgasse 9. Die Sensorelemente 3, 4 sind zumindest teilweise zwischen benachbarten anwählbaren Positionen M+, M bzw. M, M- des Schalt-/Wählhebels 1 angeordnet.

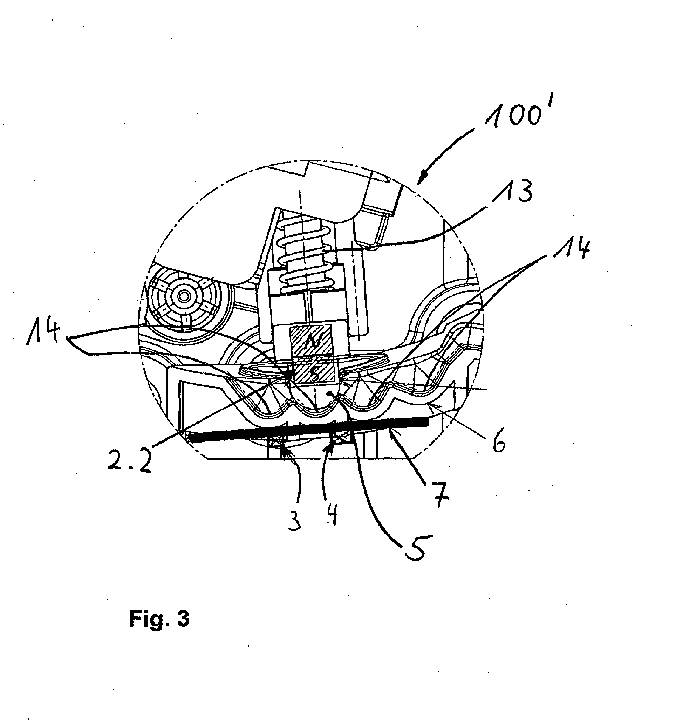

Figur 2 zeigt ferner im Detail die Ausführungsform der Vorrichtung 100 zum Erfassen der Position des Schalt-/Wählhebels 1 gemäß der Figur 1. Das Signalerzeugungselement 2.1 ist durch einen Magneten gebildet. Die Pole N, S des Magneten sind, ausgehend von dem Signalerzeugungselement 2.1 und in Richtung zu den Sensorelementen 3, 4 gesehen, nebeneinander liegend angeordnet sind. Figur 3 zeigt die Anordnung der Pole N, S eines Signalerzeugungselementes 2.2 einer erfindungsgemäßen Vorrichtung 100' zum Erfassen der Position eines Schalt-/Wählhebels in einer alternativen Ausführung. Das Signalerzeugungselement 2.2 ist in Richtung zu den Sensorelementen 3, 4 gesehen, hintereinanderliegend angeordnet.

Die sich aus den unterschiedlichen Anordnungen der Pole N, S des Signalerzeugungselementes 2.1 bzw. 2.2 ergebenden Signale der Sensorelemente 3, 4 sind in Figur 5 dargestellt. Die Sensorelemente 3, 4 sind dabei derart ausgebildet, dass sie als Messwert ein analoges Signal liefern. Das Diagramm A der Figur 5 zeigt den Verlauf des analogen Signals in Abhängigkeit der jeweiligen Position S des Schalt-/Wählhebels 1 für die Ausführung des Signalerzeugungselementes 2.1 gemäß Figur 2. Das Sensorelement 3 liefert dazu das Signal S1 und das Sensorelement 4 das Signal S2, wobei die Signale S1 und S2 bevorzugt Spannungssignale sind.

Durch Bewegen des Wählhebels 1 von einer Schaltstellung in eine andere Schaltstellung, beispielsweise von der Schaltstellung "M+" in die Schaltstellung "M-" verändert sich das analoge Signal S1 wie auch das analoge Signal S2 im Wesentlichen linear.

Bevorzugt dienen die Signale, welche in den Schaltpositionen "M", "M+" bzw. "M-" des Schalt-/Wählhebels 1, vorliegen, als Kalibrierwerte für die (nicht dargestellte) Auswerteeinrichtung. Dabei ist die Schaltposition "M", welche die neutrale Position für den Schalt-/Wählhebel 1 einer sogenannten Tiptronic bildet, bevorzugt eine Rastposition, in welcher das Rastelement 5 in eine der Aufnahmen 14 der Gegenrastmittel 6 verrastet ist. Die Schaltstellungen "M+" und "M-" sind die sogenannten antippbaren Schaltpositionen und bevorzugt greift das Rastmittel 5 in diesen Schaltpositionen nicht in eine der Aufnahmen 14 der Gegenrastmittel 6 ein.

Das Diagramm B der Figur 5 zeigt den Signalverlauf der Sensorelemente 3, 4 bei der Ausführung des Signalerzeugungselementes 2.2 gemäß Figur 3. Der dort vorgesehene diametrale Dauermagnet bewirkt, dass die von den Sensorelementen 3, 4 ausgegebenen Messwerte im Vorzeichen umschlagen, wie anhand des Verlaufes der Sensorsignale S1 und S2 in Diagramm B der Figur 5 dargestellt ist.

Dadurch ist neben dem analogen Signalwert als solchem zusätzlich durch das Vorzeichen eine weitere auswertbare Information gegeben, durch welches ein besonders hohes Maß an Ausfallsicherheit und eine optimale Fehlererkennung bei Auftreten von möglichen Störungen der Schaltvorrichtung 200 ermöglicht wird.

### Bezugszeichenliste

- 1: Schalt-/Wählhebel
- 2.1: Signalerzeugungselement
- 2.2: Signalerzeugungselement
- 3: Sensorelement
- 4: Sensorelement
- 5: Arretiermittel, Rastelement
- 6: Gegenarretiermittel, Gegenrastmittel
- 7: Platine
- 8: erste Schaltgasse
- 9: zweite Schaltgasse
- 10: erste Drehachse
- 11: zweite Drehachse
- 12: Gehäuse
- 13: Federelement
- 14: Aufnahme

- 100: Erfassungsvorrichtung
- 100': Erfassungsvorrichtung
- 200: Schaltvorrichtung

- M+: Schaltposition der Schaltgasse 9 für manuell schaltbare Gänge
- M-: Schaltposition der Schaltgasse 9 für manuell schaltbare Gänge
- M: Neutralposition der Schaltgasse 9 für manuell schaltbare Gänge
- S1: analoges Signal
- S2: analoges Signal
- N: Pol des Signalerzeugungselementes
- S: Pol des Signalerzeugungselementes

## Patentansprüche

1. Vorrichtung (100') zum Erfassen der Position eines Schalt- und/oder Wählhebels (1) für ein Getriebe mit einem Signalerzeugungselement (2.2), welches zusammen mit dem Schalt- und/oder Wählhebel (1) bewegbar ist, und mit wenigstens einem das Signal des Signalerzeugungselements (2.2) erfassenden Sensorelement (3, 4) als Messwertgeber, wobei das Signalerzeugungselement (2.2) einem Arretiermittel (5) für den Schalt-/Wählhebel (1) zugeordnet ist, **dadurch gekennzeichnet, dass** das Sensorelement (3, 4) als Messwert ein Vorzeichen abhängiges, analoges Signal (S1, S2) liefert oder dass das Sensorelement (3, 4) als Messwert ein Signal liefert, dessen Vorzeichen bei einem Wechsel von einer anwählbaren Position (M+, M; M, M-) des Schalt-/Wählhebels (1) in eine andere anwählbare Position (M+, M; M, M-) des Schalt-/Wählhebels (1) wechselt.

2. Vorrichtung nach Anspruch 1, **dadurch gekennzeichnet, dass** das Sensorelement (3, 4) ein analoges Signal liefert.

3. Vorrichtung nach Anspruch 1 oder 2, **dadurch gekennzeichnet, dass** das Signalerzeugungselement (2.2) mit dem Arretiermittel (5) fest verbunden ist und/oder dass das Signalerzeugungselement (2.2) innerhalb des Arretiermittels (5) angeordnet ist.

4. Vorrichtung nach einem der vorhergehenden Ansprüche, **dadurch gekennzeichnet, dass** das Arretiermittel (5) ein Kunststoffteil ist und das Signalerzeugungselement (2.2) zumindest teilweise von dem Material des Arretiermittels (5) umgeben ist.

5. Vorrichtung nach einem der vorhergehenden Ansprüche, **dadurch gekennzeichnet, dass** das Signalerzeugungselement (2.2) ein Magnet, insbesondere Dauermagnet, ist.

6. Vorrichtung nach einem der vorhergehenden Ansprüche, **dadurch gekennzeichnet, dass** das Signalerzeugungselement (2.2) ein Magnet ist, dessen Pole (N, S), in Richtung zu dem Sensorelement (3, 4) gesehen, hintereinander liegend angeordnet sind oder das Signalerzeugungselement ein Magnet ist, dessen Pole, in Richtung zu dem Sensorelement gesehen, nebeneinander liegend angeordnet sind.

7. Vorrichtung nach einem der vorhergehenden Ansprüche, **dadurch gekennzeichnet, dass** zwischen Signalerzeugungselement (2.2) und Sensorelement (3, 4) Gegenarretiermittel (6) angeordnet sind, welche mit dem Arretiermittel (5) zusammenwirken.

8. Vorrichtung nach einem der vorhergehenden Ansprüche, **dadurch gekennzeichnet, dass** das Sensorelement (3, 4) an einer Platine (7) oder Folie angeordnet ist.

9. Vorrichtung nach Anspruch 7, **dadurch gekennzeichnet, dass** das Sensorelement fest mit den Gegenarretiermitteln verbunden ist, insbesondere in die Gegenarretiermittel eingeformt ist.

10. Vorrichtung nach einem der vorhergehenden Ansprüche, **dadurch gekennzeichnet, dass** das Sensorelement (3, 4) wenigstens teilweise zwischen zwei anwählbaren Positionen (M+, M; M, M-) des Schalt-/Wählhebels (1) angeordnet ist.

11. Vorrichtung nach einem der vorhergehenden Ansprüche, **dadurch gekennzeichnet, dass** das wenigstens eine Sensorelement (3, 4) ein Hallsensor oder ein Linearsensor ist.

12. Vorrichtung nach einem der vorhergehenden Ansprüche, **dadurch gekennzeichnet, dass** das Sensorelement (3, 4) zum Erfassen der Positionen des Schalt-/Wählhebels (1) innerhalb einer Schaltgasse (9), vorzugsweise einer Schaltgasse (9) mit manuell anwählbaren Gängen, ausgebildet ist.

13. Vorrichtung nach einem der vorhergehenden Ansprüche, **dadurch gekennzeichnet, dass** wenigstens zwei Sensorelemente (3, 4) vorgesehen sind, von denen wenigstens ein Sensorelement (3, 4) zumindest teilweise zwischen benachbarten anwählbaren Positionen (M+, M; M, M-) des Schalt-/Wählhebels (1) liegen.

14. Vorrichtung nach Anspruch 13, **dadurch gekennzeichnet, dass** die Sensorelemente (3, 4) im Wesentlichen entlang einer Schaltgasse (9) verteilt liegen.

15. Schaltvorrichtung (200) für ein Getriebe, insbesondere für den Einsatz in einem Kraftfahrzeug, mit einer Vorrichtung (100') zum Erfassen der Position eines Schalt- und/oder Wählhebels (1) nach einem der vorhergehenden Ansprüche.

## Claims

1. Apparatus (100') for detecting the position of a shift and/or selector lever (1) for a transmission, comprising a signal-generating element (2.2), which can be moved together with the shift and/or selector lever (1), and comprising at least one sensor element (3, 4), which detects the signal from the signal-generating element (2.2), as a measurement-value transmitter, wherein the signal-generating element (2.2) is associated with a locking means (5) for the shift/selector lever (1), **characterized in that** the sensor element (3, 4) provides, as the measured value, a sign-dependent analogue signal (S1, S2), or **in that** the sensor element (3, 4) provides, as the measured value, a signal of which the sign changes when a change is made from one selectable position (M+, M; M, M-) of the shift/selector lever (1) to another selectable position (M+, M; M, M-) of the shift/selector lever (1).

2. Apparatus according to Claim 1, **characterized in that** the sensor element (3, 4) provides an analogue signal.

3. Apparatus according to Claim 1 or 2, **characterized in that** the signal-generating element (2.2) is fixedly connected to the locking means (5), and/or **in that** the signal-generating element (2.2) is arranged within the locking means (5).

4. Apparatus according to one of the preceding claims, **characterized in that** the locking means (5) is a plastic part, and the signal-generating element (2.2) is at least partially surrounded by the material of the locking means (5).

5. Apparatus according to one of the preceding claims, **characterized in that** the signal-generating element (2.2) is a magnet, in particular a permanent magnet.

6. Apparatus according to one of the preceding claims, **characterized in that** the signal-generating element (2.2) is a magnet of which the poles (N, S) are arranged such that they are situated one behind the other as seen in the direction toward the sensor element (3, 4), or the signal-generating element is a magnet of which the poles are arranged such that they are situated next to one another as seen in the direction toward the sensor element.

7. Apparatus according to one of the preceding claims, **characterized in that** mating locking means (6) which interact with the locking means (5) are arranged between the signal-generating element (2.2) and the sensor element (3, 4).

8. Apparatus according to one of the preceding claims, **characterized in that** the sensor element (3, 4) is arranged on a printed circuit board (7) or foil.

9. Apparatus according to Claim 7, **characterized in that** the sensor element is fixedly connected to the mating locking means, in particular is moulded into the mating locking means.

10. Apparatus according to one of the preceding claims, **characterized in that** the sensor element (3, 4) is at least partially arranged between two selectable positions (M+, M; M, M-) of the shift/selector lever (1).

11. Apparatus according to one of the preceding claims, **characterized in that** the at least one sensor element (3, 4) is a Hall sensor or a linear sensor.

12. Apparatus according to one of the preceding claims, **characterized in that** the sensor element (3, 4) for detecting the positions of the shift/selector lever (1) is formed within a shift gate (9), preferably a shift gate (9) with manually selectable gears.

13. Apparatus according to one of the preceding claims, **characterized in that** at least two sensor elements (3, 4) are provided, at least one sensor element (3, 4) from amongst said sensor elements being at least partially situated between adjacent selectable positions (M+, M; M, M-) of the shift/selector lever (1).

14. Apparatus according to Claim 13, **characterized in that** the sensor elements (3, 4) are situated in a manner substantially distributed along a shift gate (9).

15. Shift apparatus (200) for a transmission, in particular for use in a motor vehicle, comprising an apparatus (100') for detecting the position of a shift and/or selector lever (1) according to one of the preceding claims.

## Revendications

1. Dispositif (100') de détection de la position d'un levier de changement et/ou de sélection (1) d'une transmission, présentant un élément (2.2) de formation de signaux qui peut être déplacé en même temps que le levier de changement et/ou de sélection (1) et au moins un élément de détection (3, 4) qui saisit le signal de l'élément (2.2) de formation de signaux et qui sert d'émetteur de valeurs de mesure, l'élément (2.2) de génération de signaux étant associé à un moyen de blocage (5) du levier de sélection et/ou de changement (1),
**caractérisé en ce que**
l'élément de détection (3, 4) délivre comme valeur de mesure un signal analogique (S1, S2) qui dépend d'un signe ou
**en ce que** l'élément de détection (3, 4) délivre comme valeur de mesure un signal dont le signe change lors du passage d'une position (M+, M; M, M-) qui peut être sélectionnée pour le levier de changement et/ou de sélection (1) vers une autre position (M+, M; M, M-) qui peut être sélectionnée pour le levier de changement et/ou de sélection (1).

2. Dispositif selon la revendication 1, **caractérisé en ce que** l'élément de détection (3, 4) délivre un signal analogique.

3. Dispositif selon les revendications 1 ou 2, **caractérisé en ce que** l'élément (2.2) de génération de signaux est relié solidairement au moyen de blocage (5) et/ou **en ce que** l'élément (2.2) de génération de signaux est disposé à l'intérieur du moyen de blocage (5).

4. Dispositif selon l'une des revendications précédentes, **caractérisé en ce que** le moyen de blocage (5) est une pièce en matière synthétique et **en ce que** l'élément (2.2) de génération de signaux est entouré au moins en partie par le matériau du moyen de blocage (5).

5. Dispositif selon l'une des revendications précédentes, **caractérisé en ce que** l'élément (2.2) de génération de signaux est un aimant et en particulier un aimant permanent.

6. Dispositif selon l'une des revendications précédentes, **caractérisé en ce que** l'élément (2.2) de génération de signaux est un aimant dont les pôles (N, S) sont disposés l'un à la suite de l'autre en direction de l'élément de détection (3, 4) ou **en ce que** l'élément de génération de signaux est un aimant dont les pôles sont disposés l'un à la suite de l'autre en direction de l'élément de détection.

7. Dispositif selon l'une des revendications précédentes, **caractérisé en ce que** des moyens complémentaires de blocage (6) qui coopèrent avec le moyen de blocage (5) sont disposés entre l'élément (2.2) de génération de signaux et l'élément de détection (3, 4).

8. Dispositif selon l'une des revendications précédentes, **caractérisé en ce que** l'élément de détection (3, 4) est disposé sur une carte de circuit (7) ou sur un film.

9. Dispositif selon la revendication 7, **caractérisé en ce que** l'élément de détection est raccordé solidairement aux moyens complémentaires de blocage et en particulier sont formés dans les moyens complémentaires de blocage.

10. Dispositif selon l'une des revendications précédentes, **caractérisé en ce que** l'élément de détection (3, 4) des disposé au moins en partie entre deux positions (M+, M; M, M-) qui peuvent être sélectionnées pour le levier de changement et/ou de sélection (1).

11. Dispositif selon l'une des revendications précédentes, **caractérisé en ce que** le ou les éléments de détection (3, 4) sont un capteur de Hall ou un capteur linéaire.

12. Dispositif selon l'une des revendications précédentes, **caractérisé en ce que** l'élément de détection (3, 4) est configuré pour saisir les positions du levier de changement et/ou de sélection (1) à l'intérieur d'une piste de commutation (9), de préférence une piste de commutation (9) qui présente des rapports de transmission aptes à être sélectionnés manuellement.

13. Dispositif selon l'une des revendications précédentes, **caractérisé en ce qu'**il présente au moins deux éléments de détection (3, 4) dont au moins un élément de détection (3, 4) est situé au moins en partie entre des positions sélectionnables voisines (M+, M; M, M-) du levier de changement et/ou de sélection (1).

14. Dispositif selon la revendication 13, **caractérisé en ce que** les éléments de détection (3, 4) sont répartis essentiellement le long d'une piste de commutation (9).

15. Dispositif de commande (200) pour transmission, en particulier destiné à être utilisé dans un véhicule automobile et présentant un dispositif (100') de détection de la position d'un levier de changement et/ou de sélection (1) selon l'une des revendications précédentes.
